# EUROPEAN PATENT APPLICATION

(11) **EP 0 913 996 A1**
(43) Date of publication of application: **06.05.1999**
(21) Application number: 97119192.9
(22) Date of filing: 03.11.1997
(51) Int. Cl.: H04N 5/63, H04N 5/74

(54) **Power supply control**

(71) Applicant: SONY-WEGA PRODUKTIONS GmbH, 70736 Fellbach (DE); SONY CORPORATION, Tokyo 141 (JP)
(72) Inventor: Sprick, Olaf, 70736 Fellbach (DE); Uchida, Koichi, Shinagawa-ku, Tokyo, 141 (JP)
(74) Representative: Hoffmann, Jörg Peter, Dr. Ing.

(57) **Abstract**

According to the invention there is provided a method in which an apparatus which generates sound signals and/or visual signals, for instance a television projector with a high pressure lamp, is not immediately switched off when the power off button is pressed, but is held in a so-called holding condition for a defined period of time. The sound signals and/or visual signals generated by the apparatus are blanked out during that period, so that the user will have the impression that the apparatus is off. In the case of a television projector, this implies that the sound is totally turned off and the picture is blanked, for instance in that a shutter moves in front of the projection lens, thus interrupting the passage of light.

It is not until the defined period has passed, and unless the power off button has been pressed again (or any other switching element in the apparatus has been operated) that the signal for switching off is being transmitted and, thus, the power supply is cut off, so that the apparatus will be out of circuit then.

## Description

The invention relates to a method of controlling a switching-off and switching-on device for apparatuses that generate sound signals and/or visual signals as claimed in the generic part of claim 1, as well as a device for carrying out this method.

Methods of the kind described above are applied, in particular, for apparatuses that require a high restarting time. Restarting time as used herein means the time required from the point when the off switch of the apparatus has been operated, until the point where it is possible to set the apparatus into operation after pressing the on switch.

Especially high-power lamps, for instance high pressure lamps in sports halls or television studios, require at least 30 seconds, after being switched off, to be turned on again. Other apparatuses too, however, such as, for instance, slide projectors, television projectors, television sets, after the power off button has been pressed, do not immediately respond to re-pressing of the button for switching the apparatus on, so that the user will have to wait some time until the apparatus is ready for operation again. This is highly disadvantageous to the user especially when he only pressed the power off button by accident.

The switching off of apparatuses which are in the so-called standby mode is also problematic. Due to the standby mode, namely, there is a constant voltage applied to the apparatus, so that the apparatus can turn to the operating mode very quickly. If in the case of apparatuses having a high restarting time the power off button is pressed by accident for instance, while the apparatus is in that standby mode, the apparatus will also need some time to enter the operation condition.

Therefore, the object underlying the invention is to provide a method, as well as a device for carrying out this method, which allows setting the apparatus into operation again at least immediately after pressing the power off button.

The solution approach of the invention is to provide a method in which the apparatus is not immediately switched off when the power off button is pressed, but is held in a so-called holding condition for a defined period of time. The sound signals and/or visual signals generated by the apparatus are blanked out during that period, so that the user will have the impression that the apparatus is switched-off. It is not until the defined period has passed, and unless the power off button has been pressed again (or any other switching element in the apparatus has been operated) that the signal is being transmitted and, thus, the power supply is being cut off, so that the apparatus will be out of circuit then. in other words, within the defined period the user has the possibility to operate the power off button again (or any other switching element of the apparatus provided to turn-on the apparatus) to immediately cancel the blanking of the sound signals and/or visual signals and "turn on" the apparatus again and, in case no such action is performed, the power supply is being cut off after the predetermined period has elapsed, so that the apparatus will be really switched-off. Alternatively to switching-off the apparatus, it can be set into a standby mode.

According to claim 1 the object is accomplished in that a method of controlling a switching-off and switching-on device of an apparatus that generates sound signals and/or visual signals, comprising a power supply unit, a switching element inserted between the power supply unit and the apparatus, and a control unit used to control the switching element according to signals to turn off or to turn on the apparatus, is characterized in that after the control unit receives a signal for turning off the apparatus, the control unit will release, for a defined period of time, a signal to blank out the sound signals and/or visual signals generated by the apparatus, whereby the voltage provided by the power supply unit continues to be applied to the apparatus; when during said period of time, the control unit receives said signal for turning off the apparatus a second time or some other signal for turning on the apparatus, the control unit will release a signal to cancel the blanking; and in that after said period has been exceeded without the reception of said signal for turning off the apparatus a second time or some other signal for turning on the apparatus, the control unit will release a signal to switch off the apparatus and thus the voltage provided by the power supply unit will be totally cut off from the apparatus or to set the apparatus into a standby mode.

To accomplish the object, further, a device for controlling switching-off and switching-on processes of an apparatus that generates sound signals and/or visual signals, comprising a power supply unit, a switching element inserted between the power supply unit and the apparatus, and a control unit used to control the switching element according to signals to turn off or to turn on the apparatus, is characterized in that the control unit is equipped with a timer, whereby after the control unit receives a signal for turning off the apparatus, the control unit set its timer to run for a defined period of time and release a signal to blank out the sound signals and/or visual signals generated by the apparatus, whereby the voltage provided by the power supply unit continues to be applied to the apparatus; when during said period of time, the control unit receives said signal for turning off the apparatus a second time or some other signal for turning on the apparatus, the control unit stops its timer and releases a signal to cancel the blanking; and after said period of time has elapsed without the reception of said signal for turning off the apparatus a second time or some other signal for turning on the apparatus, the control unit will release a signal to switch off the apparatus and thus the voltage provided by the power supply unit will be totally cut off from the apparatus or to set the apparatus into a standby mode.

The essential advantage of the invention resides in the fact that the apparatus is not immediately switched off after the power off button has been pressed, but is caused to be in a condition which just gives the impression that the apparatus is switched off. If the apparatus has only been switched off by accident, the user can immediately turn the apparatus on again by re-pressing the power off button or, for instance, any button on a remote control for the apparatus normally used to switch on the apparatus. Due to the fact that the apparatus is in a so-called holding condition for a defined period of time, the user has the possibility within this period to immediately put the apparatus into operation again. There is no prolonged waiting time and hence no undesired break.

If the user makes no attempt during the defined period to switch the apparatus on again, the supply of power to the apparatus will be cut off and the apparatus will be turned-off or the apparatus will be switched into standby mode.

Advantageously, the condition the apparatus is in, whether the operating condition, the standby mode or the holding condition, is shown on a display.

For technically carrying out the method, advantageously, a control unit which gets activated after the power off button of the apparatus has been pressed is provided. This control unit controls which of the conditions the apparatus enters, depending on the time passed since the point when the power off button was pressed.

When the power off button is pressed, the control unit gets activated, and a time measuring system included in the control unit is measuring the time that has passed since the power off button was pressed. Concurrently, or only at a slightly shifted point in time, the sound signals and/or visual signals generated by the apparatus are blanked out under the control of the control unit. This implies, for instance, that in a television projector, both the sound is turned off and a so-called "shutter" is moved in front of the light source located inside the television projector, so that no light is allowed to emerge from the projector and the viewer may think that the television projector is switched-off. Preferably, a display on the projector indicates the holding condition. It is also conceivable, however, that the condition is signalled via flashing luminous means located on the apparatus, or via projection. Voltage continues to be applied to the apparatus during that holding condition.

If the user, within the defined period, now presses the power off button again or presses any other button normally used to switch the apparatus on, the timer within the control unit gets deactivated and additionally the blanking of the sound signals and/or visual signals will be immedeately cancelled. The apparatus is now ready for operation again; the control unit is inactive.

If the user performs no switching-on operation within the predefined period, the control unit will cut off the power supply of the apparatus or set the apparatus into a standby mode, i.e. perform the action the user wanted to perform when pressing the power off button for the first time. Thereafter, the control unit is inactive. When the apparatus will be switched-on again, it will be in its normal condition, i.e. no blanking of sound and/or video signals.

The method thus offers the advantage that the apparatus which has actually been turned off already by the user, but has only been set into the holding condition, i.e. blanking of sound and/or video signals, by the control unit, can be restarted very quickly within a defined period of time, and - in this case - is also ready for operation and use again immediately after the switching-on operation.

The method is suitable for use for those apparatuses which cannot be switched off for a short period of time since they have - mostly due to technical reasons - a high restarting time. Such apparatuses include also computer systems, apart from the apparatuses already mentioned.

The method according to the invention can be used, however, also for car radios, for instance, which are coupled with the vehicle's ignition, as usually the radio and the accessory devices connected thereto, such as CD players, etc. are undesirably turned off when the ignition key is being fully turned. With the method according to the invention it is possible to bridge the brief interruption of supply of current to the car radio, so that the car radio and its accessory devices can start operating at once immediately after the ignition key has been turned.

The device and the method can be used particularly advantageously in a so-called television projector in which light emitted by a strong lamp is passed through an LCD matrix activated by a television signal and is projected onto a screen.

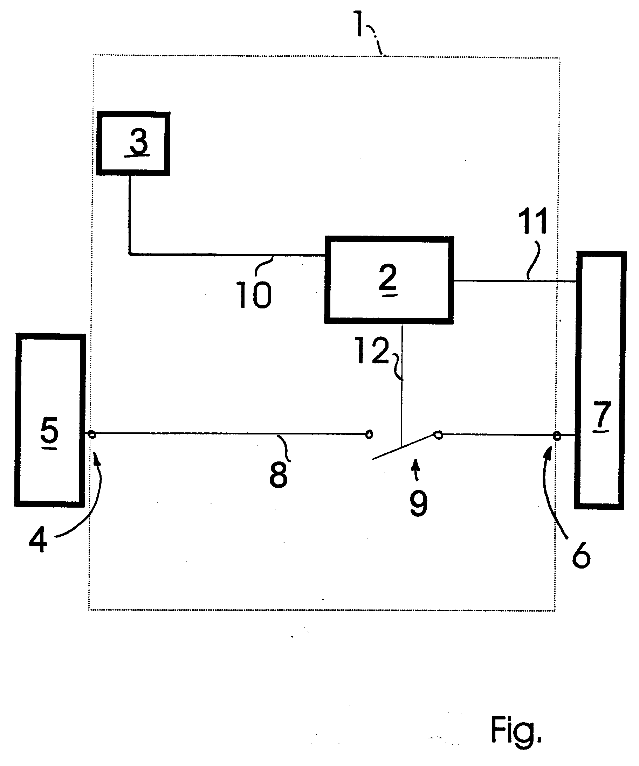

Further advantageous embodiments are set forth in the subclaims, in the description given below, and in the drawing.

The figure shows a functional diagram to illustrate the method according to the invention as well as the device according to the invention for carrying out the method, whereby there is shown a condition where the power off button has been pressed already and the apparatus is switched off.

The device 1 according to the invention essentially consists of the control unit 2, a switching element 3, and a connection element 4 each for a power supply unit 5 and a connection element 6 for the apparatus 7 to be controlled. Further, electric lines 8 which ensure the supply of power to the apparatus 7 are provided. A switching element 9 provided to interrupt the power supply is disposed in these lines 8.

A further line 10 extends from a receiver 3 for a remote control of the apparatus 7 to the control unit 2. The receiver 3 receives signals to switch-off or to switch-on the apparatus 7 and distributes them to the control unit 2. From the control unit 2 extends a control line 11 to the apparatus 7, and a control line 12 to the switching element 9.

When the apparatus 7 is in an operating condition, the control unit 2 remains inactive, i.e. the control unit 2 basically holds the switching element 9 in a closed state so that the apparatus 7 is connected to the power supply 5.

When the receiver 3 receives a signal to switch-off the apparatus, i.e. the power off button has been pressed by the user, the control unit 2 gets active. A timer within the control unit 2 will be set for a defined period of time (e.g., 30 seconds) and the control unit 2 activates the apparatus 7 via the control line 11 in such a way that the sound signals and/or visual signals generated by the apparatus 7 are being blanked out, as a result of which the user will have the impression that the apparatus 7 is off. To this end, in a television projector, for instance, the volume is turned completely down (muting) and the passage of light is interrupted by means of a shutter. As an alternative, the LCD matrix provided in the television projector can be switched so as to be totally opaque. Only a display located in the vicinity of the apparatus 7 or a display located on the apparatus 7 (not shown) will indicate to the user the current condition of the apparatus 7. The supply of power from the power supply unit 5 to the apparatus 7 via the electric line 8 is retained unchanged.

When the user operates the power off button for a second time or any other button to switch-on the apparatus 7, the control unit 2 will recognize this via the receiver 3 and interpret this as a desire to resume operation and activate the apparatus 7 via the control line 11 in such a way that the muting and blanking are cancelled, respectively. This resuming of operation can immediately be carried out.

If the set period of time, e.g. 30 seconds, is exceeded, the control unit 2 will interpret this as the user's desire that the apparatus 7 should be switched off totally. Therefore, the control line 12 extending from the control unit 2 to the switching element 9 is activated, so that the switching element 9 is operated and the supply of power from the power supply unit 5 to the apparatus 7 via the electric line 8 is interrupted. Thus the apparatus is switched-off (shown in the drawing). Alternatively, the apparatus 7 can be switched into standby mode.

When the user now operates any button to switch-on the apparatus, the control unit 2 will activate the apparatus 7 via the control line 11 in such a way that the blanking of the signals is cancelled. Further, the switching element 9 is closed, so that voltage is supplied to the apparatus 7 again, as a result of which the apparatus will be ready for operation again.

The method according to the invention as well as the device for carrying out this method are suitable for all applications also requiring a very long restarting time after the apparatus has been switched off.

## Claims

1. A method of controlling a switching-off and switching-on device of an apparatus (7) that generates sound signals and/or visual signals, comprising
- a power supply unit (5),
- a switching element (9) inserted between the power supply unit (5) and the apparatus (7), and
- a control unit (2) used to control the switching element (9) according to signals to turn off or to turn on the apparatus (7),
**characterized in that**
after the control unit (2) receives a signal for turning off the apparatus (7), the control unit (2) will release, for a defined period of time, a signal to blank out the sound signals and/or visual signals generated by the apparatus (7), whereby the voltage provided by the power supply unit (5) continues to be applied to the apparatus (7);
when during said period of time, the control unit (2) receives said signal for turning off the apparatus (7) a second time or some other signal for turning on the apparatus (7), the control unit (2) will release a signal to cancel the blanking; and in that
after said period has been exceeded without the reception of said signal for turning off the apparatus (7) a second time or some other signal for turning on the apparatus (7), the control unit (2) will release a signal to switch off the apparatus (7) and thus the voltage provided by the power supply unit (5) will be totally cut off from the apparatus (7) or to set the apparatus (7) into a standby mode.

2. The method as claimed in claim 1, **characterized in that** the control unit (2) receives said signal for turning off or for turning on the apparatus (7) via a receiver (3) for a remote control unit of said apparatus (7).

3. The method as claimed in claim 1 or 2, **characterized in that** said apparatus (7) is a television projector.

4. A device for controlling switching-off and switching-on processes of an apparatus (7) that generates sound signals and/or visual signals, comprising
- a power supply unit (5),
- a switching element (9) inserted between the power supply unit (5) and the apparatus (7), and
- a control unit (2) used to control the switching element (9) according to signals to turn off or to turn on the apparatus (7),
**characterized in that**
the control unit (2) is equipped with a timer, whereby
- after the control unit (2) receives a signal for turning off the apparatus (7), the control unit (2) set its timer to run for a defined period of time and release a signal to blank out the sound signals and/or visual signals generated by the apparatus (7), whereby the voltage provided by the power supply unit (5) continues to be applied to the apparatus (7);
- when during said period of time, the control unit (2) receives said signal for turning off the apparatus (7) a second time or some other signal for turning on the apparatus (7), the control unit (2) stops its timer and releases a signal to cancel the blanking; and
- after said period of time has elapsed without the reception of said signal for turning off the apparatus (7) a second time or some other signal for turning on the apparatus (7), the control unit (2) will release a signal to switch off the apparatus (7) and thus the voltage provided by the power supply unit (5) will be totally cut off from the apparatus (7) or to set the apparatus (7) into a standby mode.

5. The device as claimed in claim 4, **characterized by** a receiver (3) for a remote control unit of said apparatus (7) to receive signals to turn off or to switch on the apparatus (7) and to distribute these signals to the control unit (2).

6. The device as claimed in claim 4 or 5, **characterized in that** it controls the switching-off and switching-on process of a television projector.

7. The device as claimed in anyone of claims 4 to 6, **characterized by** a display showing the switching-off and switching-on condition of said apparatus (7).
